(19) Europäisches Patentamt
European Patent Office
Office européen des brevets

(11) EP 2 975 370 B1

(12) **EUROPÄISCHE PATENTSCHRIFT**

(45) Veröffentlichungstag und Bekanntmachung des Hinweises auf die Patenterteilung:
**04.11.2020 Patentblatt 2020/45**

(51) Int Cl.:
***G01J 3/50*** (2006.01) ***G01J 3/02*** (2006.01)
***G01J 3/10*** (2006.01) ***G01J 3/52*** (2006.01)

(21) Anmeldenummer: **14176865.5**

(22) Anmeldetag: **14.07.2014**

(54) **Farbmessgerät**

Colour measuring device

Colorimètre

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**20.01.2016 Patentblatt 2016/03**

(73) Patentinhaber: **X-Rite Switzerland GmbH
8105 Regensdorf (CH)**

(72) Erfinder: **Frick, Beat
8107 Buchs (CH)**

(74) Vertreter: **SSM Sandmair
Patentanwälte Rechtsanwalt
Partnerschaft mbB
Joseph-Wild-Straße 20
81829 München (DE)**

(56) Entgegenhaltungen:
**EP-A1- 1 314 972** **EP-A1- 1 914 529**
**EP-A1- 2 728 342** **JP-B2- 4 669 889**
**US-A1- 2011 141 476** **US-B2- 7 262 854**

- **HERTZSCH A ET AL: "A simple technique for optical thin film characterisation in the case of small refractive index differences between the coating and the substrate", GLASS TECHNOLOGY: EUROPEAN JOURNAL OF GLASS SCIENCE & TECHNOLOGY PART A, SOCIETY OF GLASS TECHNOLOGY, SHEFFIELD, GB, Bd. 49, Nr. 1, 1. Februar 2008 (2008-02-01), Seiten 41-46, XP001516943, ISSN: 1753-3546**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 975 370 B1

**Beschreibung**

Die Erfindung betrifft ein Farbmessgerät gemäss dem Oberbegriff des unabhängigen Anspruchs 1.

Farbmessgeräte der zur Rede stehenden Art können unabhängig von der zugrundeliegenden Messtechnologie als autonome Geräte oder als Messperipherie zum Einsatz in Verbindung mit einem steuernden und Messdaten auswertenden Rechner ausgebildet sein. Autonome Farbmessgeräte enthalten alle für den Messbetrieb erforderlichen Bedienungs- und Anzeigeorgane sowie eine eigene Stromversorgung und sind darüber hinaus vielfach auch noch mit einer Schnittstelle zur Kommunikation mit einem Rechner ausgestattet, wobei mit dem Rechner sowohl Messdaten als auch Steuerungsdaten ausgetauscht werden können. Als Messperipherie ausgelegte Farbmessgeräte haben in der Regel keine eigenen Bedienungs- und Anzeigeorgane und werden - wie jedes andere Rechnerperipheriegerät - vom übergeordneten Rechner gesteuert. Zur Kommunikation mit einem Rechner sind modernere Farbmessgeräte oft z.B. mit einer sog. USB-Schnittstelle (Universal Serial Bus) ausgerüstet, über welche in vielen Fällen gleichzeitig auch die Stromversorgung (vom angeschlossenen Rechner aus) erfolgen kann.

Metallicfarben und Lacke mit Effektpigmenten kommen heutzutage immer mehr zum Einsatz nicht nur in der Automobilindustrie. Solche Farben zeigen eine starke Winkelabhängigkeit. Lacke mit Aluminiumflakes zeigen zum Beispiel einen starken Helligkeitsflop. Lacke mit Interferenz-Effekt-Pigmenten zeigen dazu auch Farbunterschiede mit geänderter Beobachtungs- oder Beleuchtungsrichtung. Zum Messen solcher Lacke haben sich Mehrwinkelmessgeräte etabliert. Glanzmessung ist ein verwandtes Thema, bei dem das Messresultat ebenfalls winkelsensitiv ist.

Messgeräte, die solche Eigenschaften erfassen können, müssen dazu ausgebildet sein, das Messobjekt unter einer oder mehreren verschiedenen, genau definierten Beleuchtungsrichtungen (nominelle Beleuchtungsrichtungen) zu beleuchten und das vom Messobjekt zurückgestrahlte Licht aus zumindest einer genau definierten Beobachtungsrichtung (nominelle Beobachtungsrichtung) aufzupicken. Beobachtungsrichtung und Beleuchtungsrichtung können ausgetauscht werden. Farbmessgeräte dieser Art sind z.B. in den Dokumenten EP 2 703 789 A1 und EP 2 728 342 A1 in aller Ausführlichkeit beschrieben.

In der Publikation "Geräteprofilierung: Management globaler Farbkonsistenz" von Wilhelm II. Kettler, DFO Tagung Qualitätssicherung und Prüfverfahren 2008, werden verschiedene Ursachen dargelegt, die beim Einsatz solcher Farbmessgeräte zu Messfehlern führen können. Insbesondere gehören dazu die sogenannten systematischen Fehler, die auf gewisse Geräteunzulänglichkeiten wie z.B. fehlerhafte Kalibrierung zurückzuführen sind. In einem von Wilhelm H. Kettler für Farbe und Lack // Seminare Modul 2: Tiefere Einblicke in die Farbmetrik 25.-27. Juni 2014, Stuttgart (FPL) gehaltenen Vortrag mit dem Titel "Farbmanagement" wird insbesondere auch auf die sogenannten Winkelfehler hingewiesen, die sich durch die geometrischen Bedingungen der Beleuchtungs- und Beobachtungsstrahlengänge sowie durch die Aperturen der Beleuchtungs- und Beobachtungsstrahlengänge ergeben können. Winkelfehler wirken sich gerade bei der Messung an Proben mit Effektfarben besonders stark aus.

Die vorliegende Erfindung beschäftigt sich in erster Linie mit der Vermeidung bzw. Kompensation von durch solche Winkelfehler verursachten Messfehlern.

Durch die vorliegende Erfindung soll daher ein Farbmessgerät der gattungsgemässen Art dahingehend verbessert werden, dass Winkelfehler einfach korrigiert werden können, so dass die von der jeweiligen Messgeometrie vorgegebenen Beleuchtungs- und Beobachtungsrichtungen genau eingehalten und dadurch Messwertverfälschungen vermieden werden.

Diese der Erfindung zugrundeliegende Aufgabe wird durch das durch die Merkmale des unabhängigen Anspruchs 1 gekennzeichnete erfindungsgemässe Farbmessgerät gelöst. Vorteilhafte Ausgestaltungen und Weiterbildungen des erfindungsgemässen Farbmessgeräts sind Gegenstand der abhängigen Ansprüche.

Das Wesen der ersten Realisierungsform der Erfindung besteht in Folgendem: Ein Farbmessgerät weist eine Messanordnung auf, die mindestens eine Beleuchtungsanordnung zur Beaufschlagung eines Messflecks eines Messobjekts mit im Wesentlichen parallelem Beleuchtungslicht und eine Aufpickanordnung zur Erfassung des vom Messfleck unter einer Beobachtungsrichtung zurückgestrahlten Messlichts und zur Umwandlung desselben in korrespondierende elektrische Signale umfasst. Die Beleuchtungsanordnung umfasst mindestens zwei Sub-Beleuchtungsanordnungen, welche den Messfleck aus unterschiedlichen, nahe bei einer ersten vorgegebenen nominellen Beleuchtungsrichtung liegenden Sub-Beleuchtungsrichtungen jeweils mit parallelem Beleuchtungslicht beleuchten. Vorteilhafterweise, aber nicht notwendigerweise schliessen dabei die Sub-Beleuchtungsrichtungen die erste nominelle Beleuchtungsrichtung zwischen sich ein.

Durch die Unterteilung der Beleuchtungsanordnung in zwei oder mehrere Sub-Beleuchtungsanordnungen können durch Fehlausrichtung der Beleuchtungsanordnung verursachte Messfehler kompensiert bzw. vermieden werden.

Zweckmässigerweise sind die Sub-Beleuchtungsrichtungen um einen Winkel von maximal 4°-8° gegenseitig winkelversetzt.

Vorteilhafterweise umfasst die Beleuchtungsanordnung maximal fünf bis sieben Sub-Beleuchtungsanordnungen, welche den Messfleck aus unterschiedlichen, nahe bei einander liegenden Sub-Beleuchtungsrichtungen beleuchten und dabei vorzugsweise, aber nicht notwendigerweise eine nominelle Beleuchtungsrichtung zwischen sich einschliessen.

Gemäss einer vorteilhaften Ausführungsform weist das Farbmessgerät mindestens eine weitere Beleuchtungsanordnung auf, welche den Messfleck im Wesentlichen aus einer gegenüber der ersten vorgegebenen nominellen Beleuchtungsrichtung unterschiedlichen weiteren vorgegebenen nominellen Beleuchtungsrichtung mit parallelem Beleuchtungslicht beleuchtet.

Vorteilhafterweise umfasst dabei die mindestens eine weitere Beleuchtungsanordnung mindestens zwei Sub-Beleuchtungsanordnungen, welche den Messfleck aus unterschiedlichen, nahe bei der weiteren vorgegebenen nominellen Beleuchtungsrichtung liegenden Sub-Beleuchtungsrichtungen jeweils mit parallelem Beleuchtungslicht beleuchten.

Zweckmässigerweise weisen die Sub-Beleuchtungsanordnungen je eine Lichtquelle auf, die aus mindestens einer, vorzugsweise zwei oder mehreren Leuchtdioden mit unterschiedlichen Emissionsspektren besteht.

Gemäss einem weiteren vorteilhaften Aspekt der Erfindung weist das Farbmessgerät eine elektronische Steuerung für die Sub-Beleuchtungsanordnungen und die Aufpickanordnung auf und ist die Steuerung dazu ausgebildet, die Sub-Beleuchtungsanordnungen innerhalb jeweils einer Beleuchtungsanordnung separat zu steuern. Vorteilhafterweise ist dabei die Steuerung dazu ausgebildet, die Aktivierungsdauern der Sub-Beleuchtungsanordnungen innerhalb jeweils einer Beleuchtungsanordnung individuell zu steuern.

Gemäss einer weiteren vorteilhaften Ausführungsform ist die Steuerung dazu ausgebildet, die Beleuchtungsanordnungen bzw. deren Sub-Beleuchtungsanordnungen und die Aufpickanordnung für mindestens zwei unterschiedlich lange Messdauern zu aktivieren.

Ganz besonders vorteilhafterweise weist das Farbmessgerät Mittel zur Berechnung von Ableitungen der Reflektionsfaktoren für einen nominellen Beleuchtungswinkel für Winkelfehler in Richtung der Messebene auf.

Ein alternatives Beispiel besteht in Folgendem: Ein Farbmessgerät umfasst eine Messanordnung, die mindestens eine Beleuchtungsanordnung zur Beaufschlagung eines Messflecks eines Messobjekts mit vorzugsweise im Wesentlichen parallelem Beleuchtungslicht und mindestens eine Aufpickanordnung zur Erfassung des vom Messfleck zurückgestrahlten Messlichts und zur Umwandlung desselben in korrespondierende elektrische Signale umfasst. Die mindestens eine Aufpickanordnung umfasst ihrerseits mindestens zwei Sub-Aufpickanordnungen, welche vom Messfleck zurückgestrahltes Messlicht aus unterschiedlichen, nahe bei einer vorgegebenen nominellen Beobachtungsrichtung liegenden Sub-Beobachtungsrichtungen auffangen. Vorteilhafterweise, aber nicht notwendigerweise schliessen dabei die Sub-Beobachtungsrichtungen die nominelle Beobachtungsrichtung zwischen sich ein.

Durch die Unterteilung der Aufpickanordnung in zwei oder mehrere Sub-Aufpickanordnungen können durch Fehlausrichtung der Aufpickanordnung verursachte Messfehler kompensiert bzw. vermieden werden.

In dem alternativen Beispiel sind die Rollen von Beleuchtung des Messobjekts und Auffangen des vom Messobjekt zurückgestrahlten Messlichts vertauscht, die grundlegende Idee ist aber offensichtlich dieselbe. Demzufolge gilt auch für die Anzahl und Ausrichtung der Sub-Aufpickanordnungen sinngemäss dasselbe wie das zu den Sub-Beleuchtungsanordnungen Gesagte. Die erwähnte Steuerung des Farbmessgeräts ist entsprechend sinngemäss für die Ansteuerung der Sub-Aufpickanordnungen ausgelegt.

Im Folgenden wird die Erfindung anhand der Zeichnung näher erläutert. Es zeigen:

| | |
|---|---|
| Fig. 1 | eine etwas vereinfachte Darstellung des grundsätzlichen Aufbaus der ersten Realisierungsform des erfindungsgemässen Farbmessgeräts, |
| Fig. 2 | eine schematisierte Darstellung des optischen Konzepts des erfindungsgemässen Farbmessgeräts der Fig. 1, |
| Fig. 3 | eine schematische Darstellung einer Beleuchtungsanordnung des Farbmessgeräts der Fig. 2, |
| Fig. 4 | die Strahlengänge der Beleuchtungsanordnung der Fig. 3 in Seitenansicht, |
| Fig. 5 | die Strahlengänge im Grundriss, |
| Fig. 6 | ein Schema zur Erläuterung des prinzipiellen Messvorgangs, |
| Fig. 7 | ein Blockschema der elektronischen Steuerung des Farbmessgeräts, |
| Fig. 8 | eine schematische Darstellung einer Variante der Beleuchtungsanordnung des Farbmessgeräts der Fig. 2, |
| Figs. 9, 10 | zwei schematische Skizzen zur Erläuterung einer Apertur-Korrektur und |
| Fig. 11 | eine stark vereinfachte schematische Darstellung eines Ausführungsbeispiels des alternativen Beispiels. |

Für die nachfolgende Figurenbeschreibung gilt folgende Festlegung: Sind in einer Figur einzelne Bezugszeichen nicht eingetragen, so wird diesbezüglich auf die übrigen Figuren und die dazu gehörigen Beschreibungsteile verwiesen. Unter "Messanordnung" wird die Gesamtheit derjenigen Komponenten des Farbmessgeräts verstanden, welche zur Beleuchtung eines Messflecks auf der Oberfläche eines Messobjekts und zur Erfassung des von diesem Messfleck zurückgestrahlten Lichts und zur Umwandlung desselben in korrespondierende elektrische Signale dienen. Unter "Gerätenormale" ist eine gerätefeste (gedachte) Linie zu verstehen, die beim praktischen Einsatz des Farbmessgeräts (idealerweise) senkrecht auf die Oberfläche des Messobjekts steht und den Mittelpunkt des Messflecks definiert. Unter "Beleuchtungsrichtung" ist die Richtung zu verstehen, in welcher der Messfleck beleuchtet wird. Analog ist unter "Beobachtungsrichtung" die Richtung zu verstehen, aus welcher das vom Messfleck zurückgestrahlte Messlicht aufgepickt wird. Unter "nominellen Beleuchtungsrichtungen" und "nomineller Beobachtungsrichtung" sind diejenigen Beleuchtungs- bzw. Beobachtungsrichtungen zu verstehen, für welche das Farbmessgerät entsprechend seiner zugrundeliegenden Messgeometrie ausgelegt ist. Die tatsächlichen Beleuchtungs- und Beobachtungsrichtungen können z.B. aufgrund von Fertigungstoleranzen von den nominellen Beleuchtungs- und Beobachtungsrichtungen (geringfügig) abweichen. Unter "spekularer Richtung" ist die an der Oberfläche des (ebenen) Messobjekts gespiegelte nominelle Beobachtungsrichtung zu verstehen. Konventionellerweise werden die nominellen Beleuchtungs- und Beobachtungsrichtungen auf diese spekulare Richtung bezogen. Ein Mehrwinkel-Farbmessgerät hat mehrere nominelle Beleuchtungsrichtungen (und ggf. auch mehrere nominelle Beobachtungsrichtungen). Unter "Messebene" ist eine durch die Gerätenormale und alle nominellen Beleuchtungsrichtungen und die nominelle Beobachtungsrichtung sowie die spekulare Richtung verlaufende Ebene zu verstehen. Alle nominellen Winkelangaben beziehen sich auf innerhalb der Messebene liegende Richtungen.

In seiner generellen Konzeption ist das erfindungsgemässe Farbmessgerät weitestgehend ähnlich aufgebaut wie die in den eingangs erwähnten Dokumenten EP 2 703 789 A1 und EP 2 728 342 A1 offenbarten Geräte. Es umfasst ein Gehäuse, das eine Messanordnung und eine elektronische Steuerung aufnimmt. An der Vorderseite des Gehäuses ist eine Anzeigeanordnung vorgesehen. Ferner sind an der Oberseite des Gehäuses Bedienungsorgane angeordnet. Seitlich am Gehäuse befindet sich eine Schnittstelle (vorzugsweise USB) zum Anschluss des Geräts an einen externen Rechner. An der Unterseite weist das Gehäuse eine Messöffnung auf, durch welche Beleuchtungslicht aus dem Gehäuseinneren austreten und umgekehrt Messlicht von aussen in das Gehäuseinnere eintreten kann.

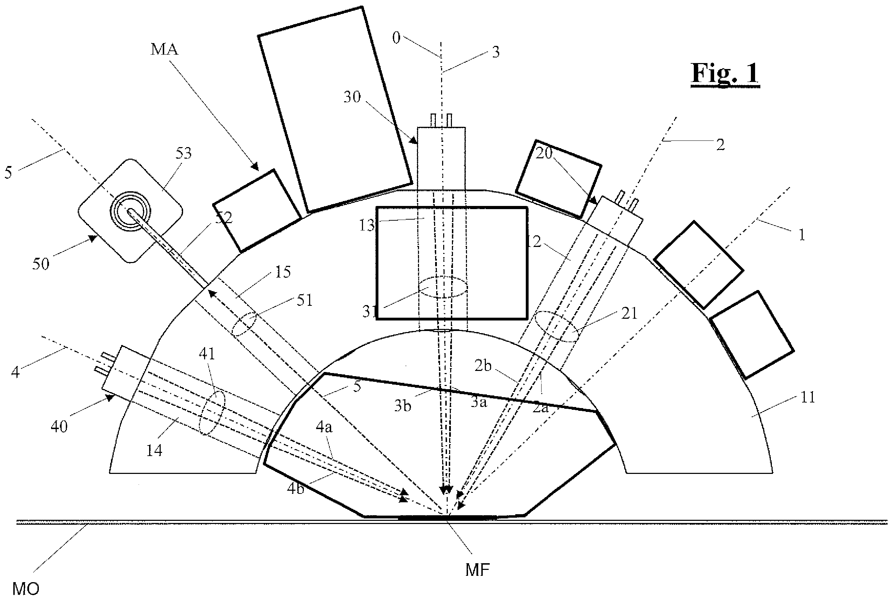

Die grundsätzliche Ausbildung der im Gehäuse befindlichen Messanordnung geht aus der Figur 1 hervor. Die als Ganze mit MA bezeichnete Messanordnung umfasst einen ortsfest im Gehäuse befestigten Bogenkörper 11, in dem alle optischen bzw. photoelektrischen Komponenten der Messanordnung MA in im gezeigten Ausführungsbeispiel vier durchgehenden Kammern 12, 13, 14 und 15 angeordnet sind. Im gezeigten Ausführungsbeispiel bestehen diese Komponenten aus drei Beleuchtungsanordnungen 20, 30 und 40 und einer Aufpickanordnung 50 mit einem Spektrometer 53, dem das Messlicht über eine Linse 51 und einen Lichtleiter 52 zugeführt wird. Das Spektrometer 53 selbst befindet sich ausserhalb der Kammer 15. Den drei Beleuchtungsanordnungen 20, 30 und 40 ist je eine Linse 21, 31 bzw. 41 zugeordnet. Die drei Beleuchtungsanordnungen 20, 30 und 40 beleuchten über die zugeordneten Linsen 21, 31 und 41 einen Messfleck MF auf einem Messobjekt MO jeweils mit parallelen Strahlenbündeln. Die Beleuchtungsanordnungen 20, 30 und 40 sind (abgesehen von geringen Toleranzabweichungen) je unter einer vorgegebenen nominellen Beleuchtungsrichtung 2, 3 bzw. 4 ausgerichtet. Die Aufpickanordnung ist unter einer vorgegebenen nominellen Beobachtungsrichtung 5 ausgerichtet. Die gesamte Messanordnung MA ist so getroffen, dass sich die nominellen Beleuchtungsrichtungen und die nominelle Beobachtungsrichtung in einer gemeinsamen Messebene MP befinden, welche auch eine mit 0 bezeichnete Gerätenormale enthält. Ferner enthält die Messebene auch eine spekulare Richtung 1, von der weg als Bezugsrichtung die Winkellagen der nominellen Beobachtungsrichtungen 2, 3 und 4 und der nominellen Beobachtungsrichtung 5 gemessen werden. Das dargestellte Ausführungsbeispiel weist eine Messgeometrie auf, bei der die drei nominellen Beobachtungsrichtungen 2, 3 und 4 in einem Winkel von 15°, 45° bzw. 110° zur spekularen Richtung 1 verlaufen, wobei die zweite nominelle Beleuchtungsrichtung 3 mit der Gerätenormalen 0 zusammenfällt. Die nominelle Beobachtungsrichtung 5 verläuft in einem Winkel von 90° zur spekularen Richtung 1.

Die Linsen 21, 31, 41 und 51 können auch ganz oder teilweise entfallen. Ebenso ist die Beleuchtung mit parallelem Licht nicht zwingend.

Im gezeigten Ausführungsbeispiel sind die Beleuchtungs- und Aufpickstrahlengänge geradlinig ausgebildet. Es ist jedoch auch möglich, z.B. aus Platzgründen, einen oder mehrere der Strahlengänge abzuknicken, also z.B. mittels Spiegel umzulenken. Wesentlich ist lediglich, dass die optischen Achsen der Strahlengangabschnitte, welche unmittelbar zum Messfleck hin bzw. von diesem weg führen, in einer gemeinsamen Messebene liegen.

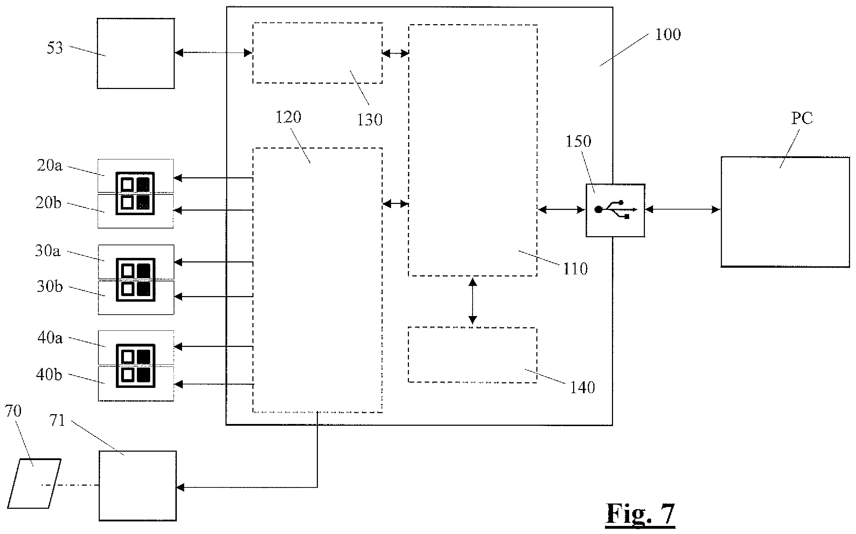

Die Beleuchtungsanordnungen 20, 30 und 40 werden von der rechnerbasierten Steuerung 100 gesteuert (Fig. 7). Letztere steuert auch die Aufpickanordnung 50 bzw. deren Spektrometer 53 und verarbeitet dessen Messsignale. Die Steuerung 100 kann Messergebnisse auf der Anzeigeanordnung anzeigen und Bedienungsbefehle von den Bedienungsorganen entgegennehmen. Ferner kann sie über die erwähnte Schnittstelle mit einem externen Rechner kommunizieren, insbesondere Messdaten übertragen und Befehle und Steuerdaten entgegennehmen. Näheres ist weiter unten im Zusammenhang mit Fig. 7 erläutert.

Soweit entspricht das beschriebene Farbmessgerät im Grundsatz den in den Dokumenten EP 2 703 789 A1 und EP 2 728 342 A1 offenbarten Farbmessgeräten dieser Art, so dass der Fachmann diesbezüglich keiner weiteren Erläuterung bedarf.

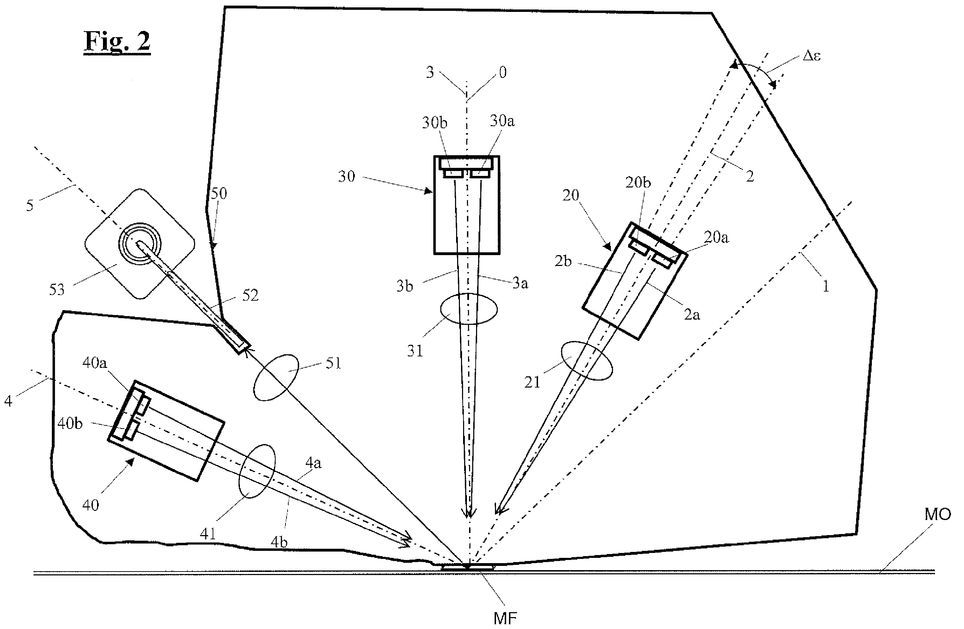

Die vorliegende Erfindung befasst sich nicht mit der grundsätzlichen Messtechnologie als solcher und der Auswertung der Messergebnisse, sondern mit der Problematik der durch Ausrichtungs- bzw. Winkelfehler insbesondere der Beleuchtungsanordnungen verursachten Verfälschung der Messergebnisse. Im Folgenden wird darauf bzw. auf die erfindungsgemässe Elimination bzw. Kompensation solcher Messverfälschungen anhand der Figuren 2-5 näher eingegangen.

Gemäss dem wesentlichsten Grundgedanken der Erfindung ist zumindest eine der Beleuchtungsanordnungen 20, 30 und 40 aus zwei oder mehreren Sub-Beleuchtungsanordnungen 20a, 20b, 30a, 30b bzw. 40a, 40b zusammengesetzt, welche das Messfeld MF des Messobjekts MO in verschiedenen, von der jeweiligen nominellen Beleuchtungsrichtung 2, 3 bzw. 4 relativ geringfügig abweichenden Sub-Beleuchtungsrichtungen 2a, 2b, 3a, 3b bzw. 4a, 4b beleuchten. Im Ausführungsbeispiel der Figuren 2-5 umfasst jede Beleuchtungsanordnung 20, 30 und 40 jeweils zwei Sub-Beleuchtungsanordnungen 20a, 20b, 30a, 30b und 40a, 40b, welche über die jeweils gemeinsamen Linsen 21, 31 und 41 je ein paralleles Strahlenbündel auf den Messfleck MF des Messobjekts MO werfen. Die Sub-Beleuchtungsanordnungen sind dabei so positioniert, dass jeweils die eine Sub-Beleuchtungsanordnung 20a, 30a und 40a den Messfleck MF in einer Sub-Beleuchtungsrichtung 2a, 3a bzw. 4a beleuchtet, welche um einen kleinen Winkel $-\Delta\varepsilon/2$ in die eine Richtung von der jeweiligen nominellen Beleuchtungsrichtung 2, 3 bzw. 4 abweicht und jeweils die andere Sub-Beleuchtungsanordnung 20b, 30b und 40b den Messfleck MF in einer Sub-Beleuchtungsrichtung 2b, 3b bzw. 4b beleuchtet, welche um einen kleinen Winkel $+\Delta\varepsilon/2$ in die andere Richtung von der jeweiligen nominellen Beleuchtungsrichtung 2, 3 bzw. 4 abweicht. Innerhalb einer Beleuchtungsanordnung 20, 30 bzw. 40 schliessen also die jeweiligen Sub-Beleuchtungsrichtungen 2a, 2b, 3a, 3b bzw. 4a, 4b die jeweiligen nominellen Beleuchtungsrichtungen 2, 3 bzw. 4 zwischen sich ein, wobei die nominellen Beleuchtungsrichtungen nicht unbedingt mittig zwischen den jeweiligen Sub-Beleuchtungsrichtungen liegen müssen, sondern das Winkelintervall $\Delta\varepsilon$ zwischen den beiden Sub-Beleuchtungsrichtungen auch unsymmetrisch teilen können. Das Winkelintervall bzw. der Differenz-Winkel $\Delta\varepsilon$ zwischen den beiden Sub-Beleuchtungsrichtungen 2a, 2b, 3a, 3b, 4a, 4b innerhalb einer Beleuchtungsanordnung 20, 30 bzw. 40 ist im Verhältnis zu den Winkeln zwischen den nominellen Beleuchtungsrichtungen 2, 3 und 4 vergleichsweise klein und beträgt vorzugsweise nicht mehr als 4°-8°, bei symmetrischer Abweichung von der jeweiligen nominellen Beleuchtungsrichtung 2, 3 bzw. 4 also +/- 2° bis +/- 4°. Zur Vermeidung einer zeichnerischen Überlastung ist das Winkelintervall bzw. der Differenz-Winkel $\Delta\varepsilon$ in Fig. 2 nur bei der Beleuchtungsanordnung 20 eingetragen.

Die folgenden Ausführungen erfolgen der Einfachheit halber nur im Zusammenhang mit der Beleuchtungsanordnung 20. Sie gelten aber sinngemäss ebenso für die beiden anderen Beleuchtungsanordnungen 30 und 40.

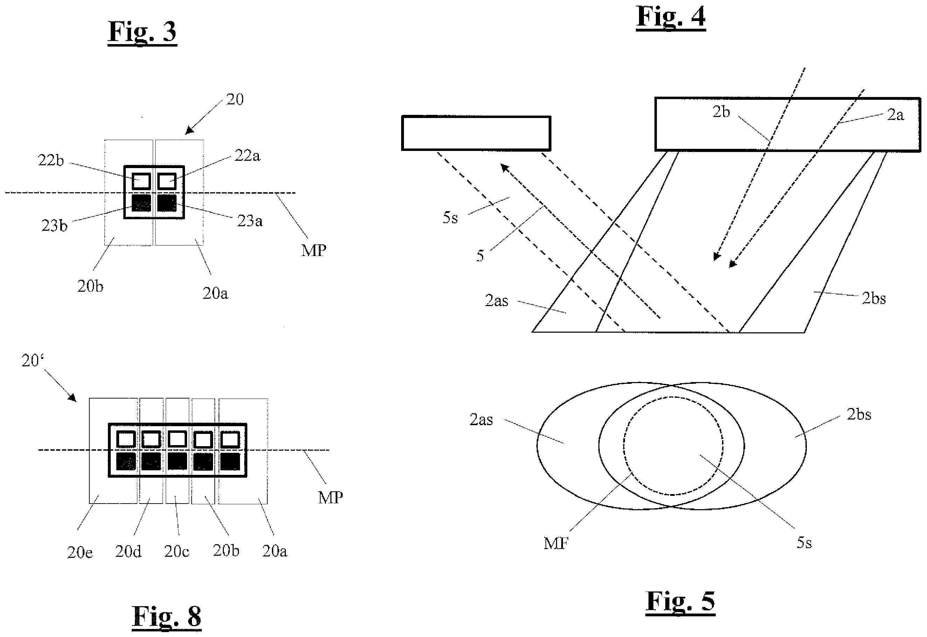

Die Fig. 3 zeigt den Aufbau der Beleuchtungsanordnung 20. Sie umfasst in der mit MP bezeichneten Messebene in geringem Abstand nebeneinander die beiden schon genannten Sub-Beleuchtungsanordnungen 20a und 20b, Jede der beiden Sub-Beleuchtungsanordnungen 20a und 20b umfasst eine Lichtquelle, die hier im Beispiel jeweils aus zwei Leuchtdioden (LEDs) 22a, 23a bzw. 22b, 23b besteht. Die beiden Leuchtdioden 22a, 23a bzw. 22b, 23b der Lichtquellen sind in Richtung senkrecht zur Messebene MP neben einander angeordnet, sind also - gemessen in einer Projektion auf die Messebene - gegenüber der nominellen Beleuchtungsrichtung 2 um denselben Betrag winkelversetzt.

Die Anzahl der Leuchtdioden pro Lichtquelle hängt vom zu messenden Spektralbereich und den spektralen Charakteristiken der Leuchtdioden ab. Im Extremfall kann eine einzige (weisse) Leuchtdiode genügen, in anderen Anwendungsfällen können auch mehrere Leuchtdioden erforderlich sein, insbesondere z.B. auch UV-Leuchtdioden. Im Allgemeinen genügen jedoch jeweils eine weisse Leuchtdiode 22a bzw. 22b und eine blaue Leuchtdiode 23a bzw. 23b.

Die Figuren 4 und 5 verdeutlichen die Beleuchtungsverhältnisse mit den beiden Sub-Beleuchtungsanordnungen 20a und 20b. Die beiden in diesen Figuren nicht dargestellten Sub-Beleuchtungsanordnungen 20a und 20b erzeugen (in Kombination mit der ihnen gemeinsam zugeordneten Linse 21) zwei in sich parallele Strahlenbündel 2as und 2bs in Richtung der jeweiligen Sub-Beleuchtungsrichtung 2a bzw. 2b. Das sich auf dem Messobjekt ergebende Beleuchtungsmuster ist aus Fig. 5 ersichtlich. Die beiden Strahlenbündel 2as und 2bs überlappen sich im Bereich des Messflecks MF und überleuchten letzteren. Vom Messfleck MF gelangt ein Bündel 5s des zurückgestrahlten Messlichts in Beobachtungsrichtung 5 in die in den Figuren 4 und 5 nicht dargestellte Aufpickanordnung 50.

Aus den vorstehenden Ausführungen ist klar, dass die eine Sub-Beleuchtungsanordnung 20a den Messfleck MF gegenüber der nominellen Beleuchtungsrichtung 2 unter einem zu kleinen Winkel und die andere Sub-Beleuchtungsanordnung 20b den Messfleck MF gegenüber der nominellen Beleuchtungsrichtung 2 unter einem zu grossen Winkel beleuchtet. Die unter diesen beiden Sub-Beleuchtungsrichtungen erzielten Messresultate (spektrale Reflektivitäten) werden in der Regel also in beiden Fällen von denjenigen Messresultaten abweichen, welche mit einer Beleuchtung exakt in Richtung der nominellen Beleuchtungsrichtung erreicht würden. Hier setzt nun der Hauptgedanke der Erfindung an: Durch eine gewichtete Mischung der Messresultate bei Beleuchtung unter den beiden Sub-Beleuchtungsrichtungen 2a und 2b lassen sich Messresultate erreichen, welche exakt mit denjenigen Messresultaten übereinstimmen, die mit einer Beleuchtung exakt in Richtung der nominellen Beleuchtungsrichtung erreicht würden. Dabei spielt es keine Rolle, wie exakt die Beleuchtungsanordnung 20 bzw. die übrigen Beleuchtungsanordnungen 30 und 40 relativ zu ihren jeweiligen nominellen Beleuchtungsrichtungen 2 bzw. 3 und 4 ausgerichtet sind, sofern die letzteren nur jeweils innerhalb der Winkelintervalle $\Delta\varepsilon$ zwischen den Sub-Beleuchtungsrichtungen 2a, 2b, 3a, 3b bzw. 4a, 4b liegen.

Falls $r_a(i, \lambda)$ die bei Beleuchtung in Sub-Beleuchtungsrichtung 2a, 3a bzw. 4a für die Wellenlänge $\lambda$ gemessene Reflektivität ist, worin i für eine der drei Beleuchtungsanordnungen 20, 30 und 40 steht, und falls $r_b(i, \lambda)$ die bei Beleuchtung in Sub-Beleuchtungsrichtung 2b, 3b bzw. 4b für die Wellenlänge $\lambda$ gemessene Reflektivität ist, worin i wiederum für eine der drei Beleuchtungsanordnungen 20, 30 und 40 steht, dann ergibt sich für die Wellenlänge $\lambda$ die korrigierte Reflektivität $r_k(i, \lambda)$ rechnerisch nach der Formel:

$$r_k(i, \lambda) = g_i * r_a(i, \lambda) + (1-g_i) * r_b(i, \lambda)$$

worin $g_i$ ein für jede Beleuchtungsanordnung getrennt empirisch ermittelter Gewichtsfaktor von 0 bis 1 ist. Bei gegen 0 strebendem Gewichtsfaktor wird die korrigierte Reflektivität $rk(i, \lambda)$ sich der unter der Sub-Beleuchtungsrichtung 2b, 3b bzw. 4b gemessenen Reflektivität $r_b(i, \lambda)$ nähern, und bei gegen 1 strebendem Gewichtsfaktor wird die korrigierte Reflektivität $r_k(i, \lambda)$ sich der unter der Sub-Beleuchtungsrichtung 2a, 3a bzw. 4a gemessenen Reflektivität $r_a(i, \lambda)$ nähern. Der Gewichtungsfaktor $g_i$ bewirkt also eine Winkelverschiebung der messtechnisch wirksamen Beleuchtungsrichtung innerhalb des Winkelintervalls $\Delta\varepsilon$ zwischen den jeweiligen beiden Sub-Beleuchtungsrichtungen 2a, 2b, 3a, 3b bzw. 4a, 4b.

In einer besonderen Ausführung der Erfindung kann der Gewichtsfaktor $g_i$ auch für jede Wellenlänge $\lambda$ getrennt bestimmt werden. In einer weiteren Ausführung kann der Gewichtsfaktor auch ausserhalb des Bereichs 0 bis 1 liegen. Im Allgemeinen kann die Interpolation oder Extrapolation auch für mehr als zwei Stützstellen durchgeführt werden, solange die Summe der Gewichte für die einzelnen Spektren normiert wird. Die vorstehend erläuterte Berechnung erfordert für jede Beleuchtungsanordnung zwei getrennte Messvorgänge unter jeweils einer der beiden (oder eventuell sogar mehreren) Sub-Beleuchtungsrichtungen 2a, 2b, 3a, 3b, und 4a, 4b. Gemäss einem weiteren wichtigen Aspekt der Erfindung kann dies dadurch erheblich vereinfacht und entsprechend zeitlich verkürzt werden, dass die Gewichtung beim Messvorgang selbst vorgenommen wird.

Der Messvorgang erfolgt wie bei den bekannten Farbmessgeräten dieser Art prinzipiell so, dass - separat für jeden Beleuchtungskanal (Beleuchtungsanordnungen 20, 30, 40) - mittels der Aufpickanordnung 50 ein vollständiges Spektrum mit einer Vielzahl von Stützpunkten (Wellenlängenbereichen von je z.B. 10..20 nm Breite) über den interessierenden Wellenlängenbereich (meist sichtbares Spektrum plus nahes UV) aufgenommen wird. Dazu wird das Spektrometer 53 von der Steuerung 100 für ein gewisses Zeitfenster $T_S$ aktiviert (in Messbereitschaft versetzt) und die Lichtquelle der jeweiligen Beleuchtungsanordnung wird innerhalb dieses Zeitfensters für eine bestimmte Zeitdauer aktiviert bzw. eingeschaltet. Das Zeitfenster $T_S$ entspricht der Integrationszeit des Spektrometers. In Abwandlung dieses allgemeinen Messschemas werden gemäss der Erfindung - wiederum für jeden Beleuchtungskanal separat - innerhalb des Zeitfensters $T_S$, in welchem das Spektrometer 53 aktiv geschaltet ist, beide Sub-Beleuchtungsanordnungen 20a, 20b bzw. 30a, 30b bzw. 40a, 40b für jeweils eine individuelle Aktivierungszeitdauer $t_a$ bzw. $t_b$ aktiviert (d.h. ihre zugehörige Leuchtdioden-Lichtquelle wird eingeschaltet), wobei die Aktivierung nicht unbedingt gleichzeitig erfolgen muss, die Aktivierungszeitdauern sich aber in der Regel überlappen. Die Aktivierungszeitdauern bestimmen sich nach der Formel:

$$t_a = G_i * T_0 \text{ und } t_b = (1-G_i) * T_0$$

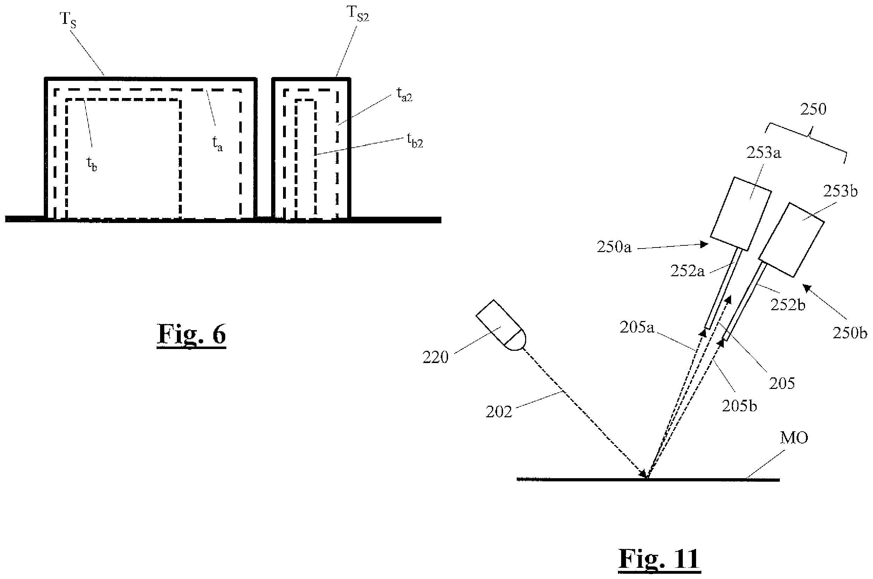

worin $G_i$ ein Gewichtungsfaktor von 0 bis 1 ist und $T_0$ eine vorgegebene maximale Aktivierungszeitdauer <= $T_S$ ist. Aus der Formel wird sofort klar, dass bei gegen 0 strebendem Gewichtsfaktor $G_i$ das Messergebnis zunehmend von der Beleuchtung durch die Sub-Beleuchtungsanordnung 20b bzw. 30b bzw. 40b und umgekehrt bei gegen 1 strebendem Gewichtsfaktor $G_i$ das Messergebnis zunehmend von der Beleuchtung durch die Sub-Beleuchtungsanordnung 20a bzw. 30a bzw. 40a bestimmt wird. Durch Wahl des Gewichtungsfaktors $G_i$ bzw. des Verhältnisses der Aktivierungszeitdauern $t_a$ und $t_b$ der beiden Sub-Beleuchtungsanordnungen kann also innerhalb der durch die beiden Sub-Beleuchtungsrichtungen gegebenen Grenzen jede beliebige effektive Winkelverschiebung eingestellt werden. Die Fig. 6 verdeutlicht diese Verhältnisse. In einer besonderen Ausführung der Erfindung kann die Gewichtung der Zeitdauer auch auf mehr als zwei Sub-Beleuchtungsanordnungen ausgeweitet werden, solange die Summe der Gewichte normiert wird.

Grundsätzlich ist es auch möglich, die Sub-Beleuchtungsanordnungen so auszurichten, dass sie die jeweilige nominelle Beleuchtungsrichtung nicht zwischen sich einschliessen, sondern alle auf derselben Seite neben der letzteren liegen. In diesem Fall werden die vorstehend skizzierten Interpolationsmassnahmen sinngemäss zu Extrapolationsmassnahmen.

In Fig. 6 ist neben dem Hauptzeitfenster $T_S$ noch ein zweites, schmäleres (zeitlich kürzeres) Zeitfenster $T_{S2}$ dargestellt, innerhalb dessen unter sonst gleichen Bedingungen jeweils eine zweite Messung durchgeführt wird, wobei die Aktivierungszeitdauern der beiden Sub-Beleuchtungsanordnungen mit $t_{a2}$ und $t_{b2}$ bezeichnet sind und ihr gegenseitiges Verhältnis gleich ist wie innerhalb des ersten Zeitfensters $T_S$. Die innerhalb dieses kürzeren Zeitfensters $T_{S2}$ durchgeführten Messungen sind für die optimale Dynamik-Anpassung des Spektrometers 53 erforderlich. Insbesondere bei der Messung an Proben mit Effekt-Farben können bei Beleuchtungsrichtungen nahe der spekularen Richtung (Glanzwinkel) die Reflektivitäten so hoch werden, dass die Integrationsdauer des Spektrometers verkürzt werden muss, um diesen nicht zu übersteuern. In einer besonderen Ausführungsform können auch mehr als zwei Zeitfenster zum Einsatz kommen.

In Fig. 7 ist das Zusammenwirken der einzelnen Komponenten des erfindungsgemässen Farbmessgeräts blockschematisch dargestellt. Die schon erwähnte rechnerbasierte Steuerung 100 umfasst als wichtigste Funktionseinheiten einen Microcontroller 110, eine Hardware-Steuerstufe 120, eine Spektrometer-Steuerstufe 130, einen Datenspeicher 140 und eine USB-Schnittstelle 150, wobei der Microcontroller 110 das Ganze koordiniert und steuert und auch für die Kommunikation mit einem über die USB-Schnittstelle 150 angeschlossenen externen Rechner PC zuständig ist.

Die Hardware-Steuerstufe 120 steuert die Beleuchtungsanordnungen bzw. deren Sub-Beleuchtungsanordnungen 20a, 20b, 30a, 30b, 40a, 40b an, d.h. schaltet die in diesen enthaltenen Lichtquellen ein bzw. aus. Zusätzlich steuert die Hardware-Steuerstufe 120 noch einen Antrieb 71, mit welchem eine Weiss-Kachel 70 in den Messstrahlengang des Farbmessgeräts eingebracht bzw. wieder aus diesem entfernt werden kann.

Die Spektrometer-Steuerstufe 130 aktiviert das Spektrometer 53 und liest die von diesem erzeugten Messdaten aus, bereitet sie auf und wandelt sie in digitale Messsignale (spektrale Reflektivitäten) um.

Der (nicht-flüchtige) Datenspeicher 140 enthält im Wesentlichen Einstellungsparameter für das Farbmessgerät. Dazu gehören insbesondere auch die Dauern der Zeitfenster für das Spektrometer und die Aktivierungszeitdauern für die einzelnen Sub-Beleuchtungsanordnungen.

Bevor das Farbmessgerät einsatzbereit ist, wird es zunächst in an sich bekannter Weise anhand von Dunkelmessungen und Messungen an einer Weisskachel (Weiss-Referenz) kalibriert. Die Messungen an der Weisskachel werden dabei für jede Beleuchtungsanordnung bzw. jede Sub-Beleuchtungsanordnung separat durchgeführt.

In einem weiteren Schritt wird das Farbmessgerät profiliert. Darunter ist zu verstehen, dass seine Einstellparameter so eingestellt werden, dass das Farbmessgerät Messresultate liefert, die möglichst genau mit denjenigen eines Referenz-Farbmessgeräts übereinstimmen. Die Bestimmung und Einstellung der Einstellparameter erfolgt unter der Kontrolle des externen Rechners PC anhand von Vergleichsmessungen. Die dabei ermittelten Einstellparameter werden dann im Datenspeicher 140 abgelegt. Zu den Einstellparametern gehören, wie schon erwähnt, insbesondere auch die Aktivierungszeitdauern der einzelnen Sub-Beleuchtungsanordnungen,

Die genannte Profilierung kann absolut oder relativ sein. Unter absoluter Profilierung ist die Angleichung an ein hochpräzises Referenz-Farbmessgerät (mit gleicher Messgeometrie) zu verstehen. Bei einer relativen Profilierung erfolgt die Einstellung der Parameter im Hinblick auf die möglichst exakte Angleichung an ein beliebiges, in der Regel nicht so präzises bzw. fehlerbehaftetes Ziel-Farbmessgerät (mit gleicher Messgeometrie). Wenn die Beleuchtungsanordnungen des Ziel-Farbmessgeräts (geringfügig) fehlerhaft ausgerichtet sind, dann kann das erfindungsgemässe Farbmessgerät durch entsprechende Wahl seiner Einstellparameter diese Fehlausrichtungen nachbilden, so dass das erfindungsgemässe Farbmessgerät und das Ziel-Farbmessgerät (fast) exakt dieselben Messresultate liefern. Diese relative Profilierung ist z.B. von Vorteil, wenn bestehende Farbmessgeräte durch neue Farbmessgeräte ergänzt oder ersetzt werden sollen, mittels der bestehenden Farbmessgeräte aber schon eine erhebliche Menge an Messdaten erzeugt worden ist und diese Messdaten auch weiterhin verwendbar sein sollen. In diesen Fällen müssen die neuen Farbmessgeräte zu den bestehenden Farbmessgeräten konsistente Messresultate liefern.

Wie schon weiter oben erwähnt, können die Beleuchtungsanordnungen 20, 30 und 40 je auch mehr als zwei Sub-Beleuchtungsanordnungen aufweisen. In Fig. 8 ist beispielsweise eine Beleuchtungsanordnung 20' mit 5 Sub-Beleuchtungsanordnungen 20a, 20b, 20c, 20d und 20e dargestellt, wobei jede dieser Sub-Beleuchtungsanordnungen wiederum zwei Leuchtdioden als Lichtquelle umfasst. Die Einstellung der messtechnisch wirksamen Beleuchtungsrichtung erfolgt sinngemäss ebenfalls durch passende Wahl der Gewichtung der einzelnen Belichtungen über entsprechende individuelle Wahl der Aktivierungszeitdauern der einzelnen Sub-Beleuchtungsanordnungen.

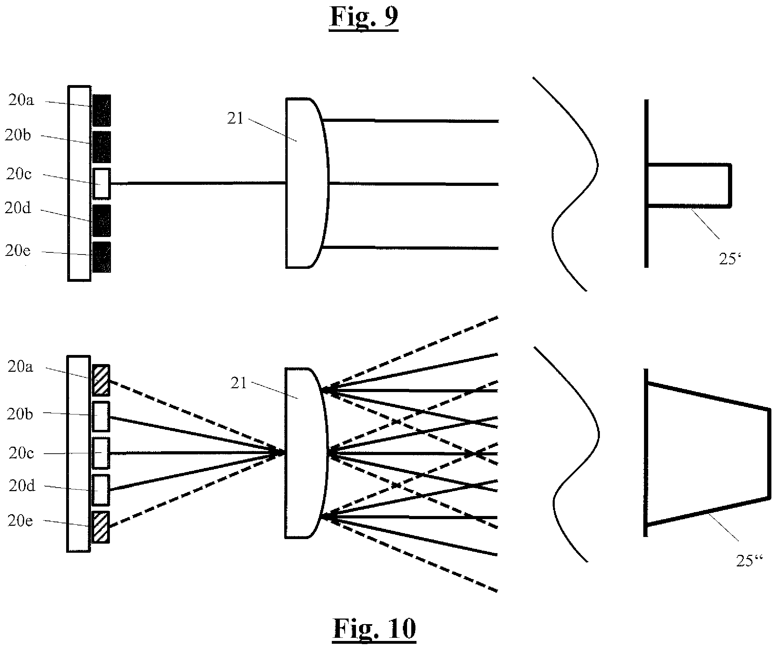

Die Figuren 9 und 10 veranschaulichen einen weiteren Vorteil, der durch die Ausbildung der Beleuchtungsanordnungen mit mehreren, z.B. wie in Fig. 8 quer zur Messebene gezeigt, mit je fünf Sub-Beleuchtungsanordnungen ermöglicht wird.

Wird wie in Figur 9 nur die zentrale Sub-Beleuchtungsanordnung 20c aktiviert, verlaufen alle Strahlen annähernd parallel, wie rechts von der telezentrischen Linse 21 gezeigt. Die Verteilung der Leuchtdichte auf dem Messfeld entspricht der ganz rechts in Figur 9 gezeigten Kurve 25'. Werden alle Sub-Beleuchtungsanordnungen aktiviert, verlaufen die Strahlrichtungen weniger kollimiert, wie rechts von der telezentrischen Linse 21 in Figur 10 gezeigt. Die Verteilung der Leuchtdichte über den Messfleck entspricht eher der in der Figur 10 ganz rechts gezeigten Kurve 25". Dies entspricht in der Wirkung einer Aperturblende.

Mit Hilfe der inneren Sub-Beleuchtungsanordnungen 20b und 20d kann bei kleinem Feldwinkel wie vorstehend beschrieben die effektive Beleuchtungsrichtung eingestellt werden (Fig. 9). Mit Aktivierung auch der äusseren Sub-Beleuchtungsanordnungen 20a und 20e und eventuell auch der mittleren Sub-Beleuchtungsanordnung 20c wird dagegen ein grösserer Feldwinkel erzeugt (Fig. 10). Je nach Anzahl aktivierter Sub-Beleuchtungsanordnungen kann damit die Apertur optimal eingestellt werden.

Im dargestellten Ausführungsbeispiel sind alle drei Beleuchtungsanordnungen in je zwei Sub-Beleuchtungsanordnungen unterteilt. Es ist jedoch auch möglich nur eine oder einzelne der Beleuchtungsanordnungen mit Sub-Beleuchtungsanordnungen auszubilden. Besonders wichtig ist dies bei derjenigen Beleuchtungsanordnung, die der spekularen Richtung (Glanzwinkel) am nächsten liegt, da in der Nähe der spekularen Richtung der Einfluss von Fehlausrichtungen (Winkelfehler) am kritischsten ist.

Ein weiterer Vorteil der Erfindung besteht darin, dass durch einzelne Aktivierung jeder Sub-Beleuchtungsanordung nicht nur der Reflektionsfaktor einer Probe unter einer bestimmten Anordnung, sondern auch Ableitungen des Reflektionsfaktors einer Probe in Richtung des Beleuchtungswinkels bestimmt werden können. Dies ist ein weiteres Kriterium, um Materialproben zu unterscheiden und kann beispielsweise die Auswahl aus einer Datenbank von Lackproben robuster machen. Die Ableitung kann beispielsweise bestimmt werden durch Lagrange-Interpolation mit Hilfe der durch die einzelnen Messwerte gegebenen Stützstellen und Ableitung des resultierenden Polynoms an der gewünschten Stelle. Die Berechnung der Ableitung kann intern durch die Steuerung 100 oder extern durch den angeschlossenen Rechner erfolgen. Als eine besonders vorteilhafte Eigenschaft der Erfindung ist es nicht erforderlich, dass die Sub-Beleuchtungseinrichtungen mit hoher Präzision montiert werden, es genügt, deren Position relativ zum nominellen Beleuchtungswinkel präzise messen zu können.

Die Messanordnung MA kann bezüglich Beleuchtungs- und Beobachtungsanordnungen auch umgekehrt ausgebildet sein. Das heisst im konkreten Fall, dass die Beleuchtung des Messobjekts nur unter einer definierten Beleuchtungsrichtung und dafür das Aufpicken des zurückgestrahlten Messlichts mittels dreier Aufpickanordnungen unter drei verschiedenen Beobachtungsrichtungen erfolgen würden, wobei sinngemäss mindestens eine Aufpickanordnung mindestens zwei Sub-Aufpickanordnungen umfassen würde. Selbstverständlich sind auch beliebige Kombinationen von einer oder mehreren Beleuchtungsanordnungen und einer oder mehreren Aufpickanordnungen möglich. Die Gewichtung der Messergebnisse der mindestens zwei Sub-Aufpickanordnungen kann dann wieder entweder rechnerisch oder durch entsprechende Einstellung der Aktivierungsfenster (Integrationszeitdauern) der Sub-Aufpickanordnungen erfolgen. Die Gewichtung erfolgt selbstverständlich für jede mit Sub-Aufpickanordnungen versehene Auspickanordnung separat und, falls zwei oder mehrere Beleuchtungsanordnungen vorhanden sind, auch individuell für jede dieser Beleuchtungsanordnungen.

In der Fig. 11 ist ein solches alternatives Beispiel schematisch dargestellt. Das Farbmessgerät umfasst hier eine einzige Beleuchtungsanordnung 220 und eine einzige Aufpickanordnung 250, die ihrerseits zwei Sub-Aufpickanordnungen 250a und 250b umfasst. Jede Sub-Aufpickanordnung umfasst einen Lichtleiter 252a bzw. 252b und ein Spektrometer 253a bzw. 253b.

Die Beleuchtungsanordnung 220 beleuchtet das Messobjekt MO in einer Beleuchtungsrichtung 202. Die beiden Sub-Aufpickanordnungen 250a und 250b empfangen vom Messobjekt MO zurückgestrahltes Messlicht aus zwei Beobachtungsrichtungen 205a bzw. 205b, welche eine nominelle Beobachtungsrichtung 205 zwischen sich einschliessen.

## Patentansprüche

1. Farbmessgerät mit einer Messanordnung (MA), die mindestens eine Beleuchtungsanordnung (20; 30; 40) zur Beaufschlagung eines Messflecks (MF) eines Messobjekts (MO) mit Beleuchtungslicht und eine Aufpickanordnung (50) zur Erfassung des vom Messfleck (MF) zurückgestrahlten Messlichts unter einer Beobachtungsrichtung (5) und zur Umwandlung desselben in korrespondierende elektrische Signale umfasst, wobei die Beleuchtungsanordnung (20; 30; 40) mindestens zwei Sub-Beleuchtungsanordnungen (20a, 20b) umfasst, welche den Messfleck (MF) aus unterschiedlichen, nahe bei einer ersten vorgegebenen nominellen Beleuchtungsrichtung (2; 3; 4), unter der die Beleuchtungsanordnung (20; 30; 40) ausgerichtet ist, liegenden Sub-Beleuchtungsrichtungen (2a, 2b; 3a, 3b; 4a, 4b) beleuchten, **dadurch gekennzeichnet, dass** die Sub-Beleuchtungsrichtungen (2a, 2b; 3a, 3b; 4a, 4b) gegenseitig winkelversetzt sind und mit der nominellen Beleuchtungsrichtung (5) in einer gemeinsamen Messebene (MP) liegen, sodass durch Fehlausrichtung der Beleuchtungsanordnung verursachte Messfehler durch eine gewichtete Mischung der Messresultate bei Beleuchtung unter den beiden Sub-Beleuchtungsrichtungen kompensiert bzw. vermieden werden.

2. Farbmessgerät nach Anspruch 1, **dadurch gekennzeichnet, dass** die Sub-Beleuchtungsrichtungen (2a, 2b; 3a, 3b; 4a, 4b) die erste nominelle Beleuchtungsrichtung (2; 3; 4) zwischen sich einschliessen.

3. Farbmessgerät nach Anspruch 1 oder 2, **dadurch gekennzeichnet, dass** die Sub-Beleuchtungsrichtungen (2a, 2b; 3a, 3b; 4a, 4b) um einen Winkel ($\Delta\varepsilon$) von maximal 4°-8° gegenseitig winkelversetzt sind.

4. Farbmessgerät nach einem der vorangehenden Ansprüche, **dadurch gekennzeichnet, dass** die Beleuchtungsanordnung (20; 30; 40) maximal fünf bis sieben Sub-Beleuchtungsanordnungen umfasst, welche den Messfleck (MF) aus unterschiedlichen, nahe bei einander liegenden Sub-Beleuchtungsrichtungen beleuchten und dabei eine nominelle Beleuchtungsrichtung (2; 3; 4) zwischen sich einschliessen.

5. Farbmessgerät nach einem der vorangehenden Ansprüche, **dadurch gekennzeichnet, dass** es mindestens eine weitere Beleuchtungsanordnung (30; 40) aufweist, welche den Messfleck (MF) im Wesentlichen aus einer gegenüber der ersten vorgegebenen nominellen Beleuchtungsrichtung (2) unterschiedlichen weiteren vorgegebenen nominellen Beleuchtungsrichtung (2; 3; 4) beleuchtet.

6. Farbmessgerät nach Anspruch 5, **dadurch gekennzeichnet, dass** die mindestens eine weitere Beleuchtungsanordnung (20; 30; 40) mindestens zwei Sub-Beleuchtungsanordnungen (20a, 20b; 30a, 30b; 40a, 40b) umfasst, welche den Messfleck (MF) aus unterschiedlichen, nahe bei der weiteren vorgegebenen nominellen Beleuchtungsrichtung (2; 3; 4) liegenden Sub-Beleuchtungsrichtungen (3a, 3b; 4a, 4b) beleuchten.

7. Farbmessgerät nach einem der vorangehenden Ansprüche, **dadurch gekennzeichnet, dass** die Sub-Beleuchtungsanordnungen (20a, 20b; 30a, 30b; 40a, 40b) je eine Lichtquelle aufweisen, die aus mindestens einer Leuchtdiode (22a, 23a; 22b, 23b) besteht.

8. Farbmessgerät nach einem der vorangehenden Ansprüche, **dadurch gekennzeichnet, dass** es eine elektronische Steuerung (100) für die Sub-Beleuchtungsanord-nungen (20a, 20b; 30a, 30b; 40a, 40b) und die Aufpickanordnung (50) aufweist, und dass die Steuerung (100) dazu ausgebildet ist, die Sub-Beleuchtungsanordnungen (20a, 20b; 30a, 30b; 40a, 40b) innerhalb jeweils einer Beleuchtungsanordnung (20; 30; 40) separat zu steuern.

9. Farbmessgerät nach den Ansprüchen 7 und 8, **dadurch gekennzeichnet, dass** die Steuerung (100) dazu ausgebildet ist, die Aktivierungsdauern der Sub-Beleuchtungs-anordnungen (20a, 20b; 30a, 30b; 40a, 40b) innerhalb jeweils einer Beleuchtungsanordnung (20; 30; 40) individuell zu steuern.

10. Farbmessgerät nach einem der Ansprüche 8-9, **dadurch gekennzeichnet, dass** die Steuerung (100) dazu ausgebildet ist, die Beleuchtungsanordnungen (20; 30; 40) bzw. deren Sub-Beleuchtungsanordnungen (20a, 20b; 30a, 30b; 40a, 40b) und die Aufpickanordnung (50) für mindestens zwei unterschiedlich lange Messdauern zu aktivieren.

11. Farbmessgerät nach einem der vorhergehenden Ansprüche **dadurch gekennzeichnet, dass** es Mittel zur Berechnung von Ableitungen der Reflektionsfaktoren für einen nominellen Beleuchtungswinkel für Winkelfehler in Richtung der Messebene (MP) aufweist.

12. Farbmessgerät nach Anspruch 7, **dadurch gekennzeichnet, dass** die Sub-Beleuchtungsanordnungen (20a, 20b; 30a, 30b; 40a, 40b) je eine Lichtquelle aufweisen, die aus zwei Leuchtdioden (22a, 23a, 22b, 23b) mit unterschiedlichen Emissionsspektren besteht.

13. Farbmessgerät nach irgendeinem der vorherigen Ansprüche, **dadurch gekennzeichnet, dass** die mindestens zwei Sub-Beleuchtungsanordnungen (20a, 20b; 30a, 30b; 40a, 40b) den Messfleck (MF) mit parallelem Beleuchtungslicht beleuchten.

**Claims**

1. A colour measurement device having a measurement array (MA) which comprises at least an illumination array (20, 30, 40) for illuminating a measurement spot (MF) of a measurement object (MO) with illumination light and a detection array (50) for detecting the measurement light reflected from the measurement spot (MF) in an observation direction (5) and for transforming the same into corresponding electrical signals, wherein the illumination array (20, 30, 40) comprises at least two sub-illumination arrays (20a, 20b) which illuminate the measurement spot (MF) from different sub-illumination directions (2a, 2b; 3a, 3b; 4a, 4b) which are close to a first predetermined nominal illumination direction (2; 3; 4) to which the illumination array (20; 30; 40) is oriented,
**characterized in that**
the sub-illumination directions (2a, 2b; 3a, 3b; 4a, 4b) are mutually angularly offset and are disposed in a measurement plane (MP) common with the normal illumination direction (5), so that measurement errors caused by an erroneous orientation of the illumination array can be compensated and/or avoided by a weighted mixture of the measurement results under illumination along both sub-illumination directions.

2. The colour measurement device according to claim 1, **characterized in that** the sub-illumination directions (2a, 2b; 3a, 3b; 4a, 4b) enclose between each other the first nominal illumination direction (2; 3; 4).

3. The colour measurement device according to claim 1 or 2, **characterized in that** the sub-illumination directions (2a, 2b; 3a, 3b; 4a, 4b) are offset against each other by an angle ($\Delta\varepsilon$) of at most 4°-8°.

4. The colour measurement device according to anyone of the preceding claims, **characterized in that** the illumination array (20; 30; 40) comprises at most 5 to 7 sub-illumination arrays which illuminate the measurement spot (MF) from different sub-illumination directions which are disposed close to each other and at the same time enclose a nominal illumination direction (2; 3; 4) between each other.

**5.** The colour measurement device according to anyone of the preceding claims, **characterized in that** it includes at least one further illumination array (30; 40) which illuminates the measurement spot (MF) substantially from a further predetermined nominal illumination direction (2; 3; 4) different from the first predetermined nominal illumination direction (2).

**6.** The colour measurement device according to claim 5, **characterized in that** the at least one further illumination array (20; 30; 40) comprises at least two sub-illumination arrays (20a, 20b; 30a, 30b; 40a, 40b) which illuminate the measurement spot (MF) from different sub-illumination directions (3a, 3b; 4a, 4b) which are located close to the further predetermined nominal illumination direction (2; 3; 4).

**7.** The colour measurement device according to anyone of the preceding claims, **characterized in that** the sub-illumination arrays (20a, 20b; 30a, 30b; 40a, 40b) each have a light source consisting of at least one light emitting diode (22a, 23a, 22b, 23b).

**8.** The colour measurement device according to anyone of the preceding claims, **characterized in that** it has an electronic controller (100) for the sub-illumination arrays (20a, 20b; 30a, 30b; 40a, 40b) and that the controller (100) is configured to control the sub-illumination arrays (20a, 20b; 30a, 30b; 40a, 40b) separately within each one of the illumination arrays (20; 30; 40).

**9.** The colour measurement device according to claims 7 and 8, **characterized in that** the controller (100) is configured to control the activation periods of the sub-illumination arrays (20a, 20b; 30a, 30b; 40a, 40b) individually within each one of the illumination arrays (20; 30; 40).

**10.** The colour measurement device according to anyone of claims 8-9, **characterized in that** the controller (100) is configured to active the illumination arrays (20; 30; 40) and/or their sub-illumination arrays (20a, 20b; 30a, 30b; 40a, 40b) and the detection array (50) for at least two measurement periods of different length.

**11.** The colour measurement device according to anyone of the preceding claims, **characterized in that** it has means for calculating derivations of the reflection factors for a nominal illumination angle for angular errors in the direction of the measurement plane (MP).

**12.** The colour measurement device according to claim 7, **characterized in that** the sub-illumination arrays (20a, 20b; 30a, 30b; 40a, 40b) each have a light source consisting of two light emitting diodes (22a, 23a, 22b, 23b) with different emission spectra.

**13.** The colour measurement device according to any one of the preceding claims, **characterized in that** the at least two sub-illumination arrays (20a, 20b, 30a, 30b; 40a, 40b) illuminate the measurement spot with parallel illumination light.

## Revendications

**1.** Colorimètre comprenant un dispositif de mesure (MA) comportant au moins un dispositif d'éclairage (20 ; 30 ; 40) destiné à exposer un spot de mesure (MF) d'un objet à mesurer (MO) à une lumière d'éclairage et un dispositif de capture (50) destiné à capter la lumière de mesure réfléchie par le spot de mesure (MF) dans un sens d'observation (5) et destiné à convertir cette dernière en signaux électriques correspondants, ledit dispositif d'éclairage (20 ; 30 ; 40) comprenant au moins deux sous-unités de dispositif d'éclairage (20a, 20b) qui éclairent le spot de mesure (MF) à partir de sens d'éclairage secondaires (2a, 2b ; 3a, 3b ; 4a, 4b) différents situés à proximité d'un premier sens d'éclairage nominal (2 ; 3 ; 4) prédéterminé selon lequel est orienté le dispositif d'éclairage (20 ; 30 ; 40),
**caractérisé en ce que**
les sens d'éclairage secondaires (2a, 2b ; 3a, 3b ; 4a, 4b) sont en décalage angulaire les uns par rapport aux autres et sont situés dans un plan de mesure (MP) commun avec la lumière d'éclairage nominale (5), de telle manière que les erreurs de mesure causées par un mauvais alignement du dispositif d'éclairage sont compensées voire évitées par une combinaison pondérée des résultats de mesure dans le cadre d'un éclairage dans les deux sens d'éclairage secondaires.

**2.** Colorimètre selon la revendication 1, **caractérisé en ce que** les sens d'éclairage secondaires (2a, 2b ; 3a, 3b ; 4a, 4b) sont de part et d'autre du premier sens d'éclairage nominal (2 ; 3 ; 4).

**3.** Colorimètre selon la revendication 1 ou 2, **caractérisé en ce que** les sens d'éclairage secondaires (2a, 2b ; 3a, 3b ; 4a, 4b) sont en décalage angulaire l'un par rapport à l'autre selon un angle ($\Delta\varepsilon$) de 4° à 8° maximum.

**4.** Colorimètre selon l'une des revendications précédentes, **caractérisé en ce que** le dispositif d'éclairage (20 ; 30 ; 40) comprend au maximum cinq à sept sous-unités de dispositif d'éclairage qui éclairent le spot de mesure (MF) à partir de sens d'éclairage secondaires qui sont proches l'un de l'autre, de part et d'autre d'un sens d'éclairage nominal (2 ; 3 ; 4).

**5.** Colorimètre selon l'une des revendications précédentes, **caractérisé en ce qu'**il présente au moins un autre dispositif d'éclairage (30 ; 40) éclairant le spot de mesure (MF) essentiellement à partir d'un autre sens d'éclairage nominal (2 ; 3 ; 4) prédéterminé qui est différent du premier sens d'éclairage nominal (2) prédéterminé.

**6.** Colorimètre selon la revendication 5, **caractérisé en ce que** l'au moins un autre dispositif d'éclairage (20 ; 30 ; 40) comprend au moins deux sous-unités de dispositif d'éclairage (20a, 20b ; 30a, 30b ; 40a, 40b) éclairant le spot de mesure (MF) à partir de différents sens d'éclairage secondaires (3a, 3b ; 4a, 4b) proches dudit autre sens d'éclairage nominal (2 ; 3 ; 4) prédéterminé.

**7.** Colorimètre selon l'une des revendications précédentes, **caractérisé en ce que** les sous-unités de dispositif d'éclairage (20a, 20b, 30a, 30b, 40a, 40b) présentent chacune une source de lumière constituée par au moins une diode électroluminescente (22a, 23a ; 22b, 23b).

**8.** Colorimètre selon l'une des revendications précédentes, **caractérisé en ce qu'**il présente un organe de commande électronique (100) relatif aux sous-unités de dispositif d'éclairage (20a, 20b ; 30a, 30b ; 40a, 40b) et au dispositif de capture (50), et **en ce que** l'organe de commande (100) est conçu pour commander séparément les sous-unités de dispositif d'éclairage (20a, 20b ; 30a, 30b ; 40a, 40b) à l'intérieur de leur dispositif d'éclairage (20 ; 30 ; 40) respectif.

**9.** Colorimètre selon les revendications 7 et 8, **caractérisé en ce que** l'organe de commande (100) est conçu pour commander individuellement les durées d'activation des sous-unités de dispositif d'éclairage (20a, 20b ; 30a, 30b ; 40a, 40b) à l'intérieur de leur dispositif d'éclairage (20 ; 30 ; 40) respectif.

**10.** Colorimètre selon l'une des revendications 8 et 9, **caractérisé en ce que** l'organe de commande (100) est conçu pour activer les dispositifs d'éclairage (20 ; 30 ; 40) ou leurs sous-unités de dispositif d'éclairage (20a, 20b ; 30a, 30b ; 40a, 40b) ainsi que le dispositif de capture (50) pendant au moins deux périodes de mesure de durées différentes.

**11.** Colorimètre selon l'une des revendications précédentes, **caractérisé en ce qu'**il présente des moyens de calcul des déviations des facteurs de réflexion pour un angle d'éclairage nominal relativement aux erreurs angulaires dans le sens du plan de mesure (MP) présente.

**12.** Colorimètre selon la revendication 7, **caractérisé en ce que** les sous-unités de dispositif d'éclairage (20a, 20b ; 30a, 30b ; 40a, 40b) présentent chacune une source de lumière constituée par deux diodes électroluminescentes (22a, 23a, 22b, 23b) de spectres d'émission différents.

**13.** Colorimètre selon l'une quelconque des revendications précédentes, **caractérisé en ce que** les au moins deux sous-unités de dispositif d'éclairage (20a, 20b ; 30a, 30b ; 40a, 40b) éclairent le spot de mesure (MF) avec de la lumière d'éclairage parallèle.

Fig. 1
1
2
11
21
20
2
2a
2b
3a
3
0
30
13
31
3b
MF
5
4a
4b
51
15
MA
52
53
41
14
40
50
5
4
MO

Fig. 2
MO
MF
Δε
0
1
2
2a
2b
3
3a
3b
4
4a
4b
5
20
20a
20b
21
30
30a
30b
31
40
40a
40b
41
50
51
52
53

Fig. 3
20
22b
22a
23b
23a
MP
20b
20a
Fig. 4
2b
2a
5s
5
2as
2bs
20'
MP
20e
20d
20c
20b
20a
Fig. 8
2as
2bs
MF
5s
Fig. 5

250
253b
250b
253a
252b
205
MO
205b
252a
250a
205a
202
220
$T_{S2}$
$t_{a2}$
$t_{b2}$
$t_a$
$T_S$
$t_b$

Fig. 11

Fig. 6

PC
100
150
110
140
130
120
53
20a
20b
30a
30b
40a
40b
71
70

**Fig. 7**

Fig. 9
25'
21
20a
20b
20c
20d
20e
Fig. 10
25''
21
20a
20b
20c
20d
20e

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 2703789 A1
- EP 2728342 A1